# EUROPÄISCHE PATENTSCHRIFT

(11) **EP 3 721 531 B1**
(45) Veröffentlichungstag und Bekanntmachung des Hinweises auf die Patenterteilung: **11.01.2023**
(21) Anmeldenummer: 18803546.3
(22) Anmeldetag: 08.11.2018
(51) Int. Cl.: H02J 50/12, H02J 50/40, H02J 50/90, H02J 50/80, B60L 53/12, B60L 53/38

(54) **ANLAGE ZUR KONTAKTLOSEN ENERGIEÜBERTRAGUNG MIT MEHREREN PRIMÄRLEITERABSCHNITTEN UND MIT ZUMINDEST EINEM MOBILTEIL UND ENTSPRECHENDES VERFAHREN**
SYSTEM FOR CONTACTLESS ENERGY TRANSMISSION, HAVING MULTIPLE PRIMARY CONDUCTOR SECTIONS AND AT LEAST ONE MOBILE PART, AND CORRESPONDING METHOD
INSTALLATION DE TRANSMISSION D'ÉNERGIE SANS CONTACT AYANT UNE PLURALITÉ DE PORTIONS DE CONDUCTEUR PRIMAIRE ET AU MOINS UNE PARTIE MOBILE ET PROCÉDÉ CORRESPONDANT

(30) Priorität: 04.12.2017 DE 102017011163
(43) Veröffentlichungstag der Anmeldung: 14.10.2020
(73) Patentinhaber: SEW-EURODRIVE GmbH & Co. KG, 76646 Bruchsal (DE)
(72) Erfinder: SCHMIDT, Josef, 76676 Graben-Neudorf (DE); SCHÄFER, Thomas, 76689 Karlsdorf-Neuthard (DE); SCHÄFER, Jens, 76676 Graben-Neudorf (DE); MAHLEIN, Jochen, 76139 Karlsruhe (DE); STOCKENBERGER, Ulrich, 76694 Forst (DE)
(86) Internationale Anmeldenummer: PCT/EP2018/025285
(87) Internationale Veröffentlichungsnummer: WO 2019/110141

(56) Entgegenhaltungen:
- WO-A2-2008/051611
- DE-A1- 10 329 776
- US-A1- 2014 094 116
- US-A1- 2015 042 168

## Beschreibung

Die Erfindung betrifft eine Anlage mit von jeweiligen Einspeisegeräten mit Wechselstrom versorgten Primärleiterabschnitten und mit zumindest einem Mobilteil und ein Verfahren zum Betreiben einer solchen Anlage.

Es ist allgemein bekannt, ein Mobilteil induktiv aus einem am Boden verlegten Primärleiter zu versorgen.

**Aus der** US 2014 / 094116 A1 **ist als nächstliegender Stand der Technik eine Leistungsübertragungseinrichtung mit Geräteerkennung bekannt.**

**Aus der** US 2015 / 042168 A1 **ist ein Verfahren zum Detektieren und Identifizieren eines elektrischen Fahrzeugs bekannt.**

Aus der DE10329776 A1 ist ein Regallager mit induktiver Energieversorgung der Fahrzeuge bekannt.

Der Erfindung liegt daher die Aufgabe zugrunde, die Sicherheit beim Betrieb einer Anlage zu verbessern.

Erfindungsgemäß wird die Aufgabe bei der Anlage nach den in Anspruch 1 und bei dem Verfahren nach den in Anspruch 10 oder 9 angegebenen Merkmalen gelöst.

Wichtige Merkmale der Erfindung bei der Anlage sind, dass sie mit von jeweiligen Einspeisegeräten mit Wechselstrom versorgten Primärleiterabschnitten und mit zumindest einem Mobilteil vorgesehen ist,
wobei das Mobilteil insbesondere an seiner Unterseite eine Sekundärwicklung aufweist, welche induktiv koppelbar, insbesondere gekoppelt, ist mit einem der Primärleiterabschnitte,
wobei die Einspeisegeräte in die Primärleiterabschnitte jeweilige Wechselströme mit unterschiedlichen Frequenzen einprägen,
wobei das Mobilteil ein Mittel zum Erfassen der Frequenz des in den mit der Sekundärwicklung induktiv gekoppelten Primärleiterabschnitt eingeprägten Wechselstroms aufweist.

Von Vorteil ist dabei, dass mittels der Bestimmung der Frequenz eine Bestimmung des Positionsbereichs ermöglicht ist, in welchem sich das Mobilteil befindet. Somit ist einerseits eine grobe Bestimmung der Position ermöglicht und andererseits eine Überprüfung der von einem Positionsbestimmungsmittel bestimmten Position. Die Güte des sekundärseitigen Schwingkreises ist derart ausgelegt, dass mehrere solcher Frequenzen mit voneinander genügend großer Beabstandung verwendbar sind. Somit ist mittels der Frequenzen eine Identifizierung der Positionsbereiche ermöglicht.

Bei einer vorteilhaften Ausgestaltung fungieren die Einspeisegeräte als Stromquelle. Von Vorteil ist dabei, dass auch bei gleichzeitiger Versorgung mehrerer Mobilteile aus demselben Primärleiter dieselbe Leistung ans jeweilige Mobilteil übertragbar ist, da das vom Primärleiter erzeugte Wechselmagnetfeld vom Strom im Primärleiter abhängt.

Bei einer vorteilhaften Ausgestaltung weist das Mobilteil einen Energiespeicher auf zum Abpuffern von Spitzenleistungsbedarfen und/oder zumindest zeitabschnittsweisen Entfernen von den Primärleiterabschnitten. Von Vorteil ist dabei, dass Abpuffern von Spitzenleistungsbedarfen ermöglicht ist und/oder ein zumindest zeitabschnittsweises Wegbewegen des Mobilteils von den Primärleiterabschnitten, so dass das Mobilteil in der Verfahrfläche frei und unabhängig von den stationär angeordneten Primärleiterabschnitten bewegbar ist.

Bei einer vorteilhaften Ausgestaltung ist der Sekundärwicklung eine Kapazität parallel und/oder in Reihe zugeschaltet, wobei der so gebildete Schwingkreis eine Resonanzfrequenz aufweist, insbesondere wobei der so gebildete Schwingkreis eine Resonanzfrequenz und eine Güte aufweist. Von Vorteil ist dabei, dass die Güte des Schwingkreises derart dimensioniert ist, dass eine in der Praxis ausreichend gute resonante induktive Übertragung elektrischer Leistung ermöglicht ist, auch wenn die verwendete Frequenz abweicht von der in den Primärleiter eingespeisten Frequenz. Somit sind also Frequenzen aus einem Frequenzband verwendbar, welche um die Resonanzfrequenz herum verteilt sind, aber noch genügend viel Leistung übertragbar machen, insbesondere mehr als 50% der bei Resonanzfrequenz übertragbaren Leistung.

Bei einer vorteilhaften Ausgestaltung weist das Mobilteil eine Steuerung auf, welche mit dem Mittel zum Datenaustausch verbunden ist,
und/oder wobei das Mobilteil ein Positionsbestimmungsmittel aufweist, welches mit der Steuerung zum Datenaustausch verbunden ist. Von Vorteil ist dabei, dass die Steuerung einerseits die bestimmte Position und andererseits die bestimmte Frequenz zugeführt bekommt. Somit ist es der Steuerung ermöglicht, durch Vergleich der bestimmten Position und des zur Frequenz im Speicher der Steuerung hinterlegten Positionsbereich zu überprüfen, ob die Position korrekt bestimmt worden ist. Abhängig vom Ergebnis der Überprüfung ist eine Warnung oder Fehlermeldung herausgebbar.

Bei einer vorteilhaften Ausgestaltung nimmt der Frequenzabstand der jeweiligen Frequenz von der Resonanzfrequenz monoton ab mit dem Kehrwert eines dem jeweiligen Primärleiterabschnitt zugeordneten Leistungsbedarfs,
insbesondere wobei der dem jeweiligen Primärleiterabschnitt zugeordneten Leistungsbedarf die beim Fahren entlang des jeweiligen Primärleiterabschnitts erwartete durchschnittliche Leistung oder die beim Fahren entlang des jeweiligen Primärleiterabschnitts erwartete Spitzenleistung ist. Von Vorteil ist dabei, dass ein Primärleiterabschnitt, in welchem das Mobilteil einen größeren Leistungsbedarf hat, weil es beispielsweise mehrere Antriebe gleichzeitig betreiben muss, eine von der Resonanzfrequenz nicht oder zumindest weniger beabstandete Frequenz zugewiesen bekommt als ein Primärleiterabschnitt, in welchem ein geringerer Leistungsbedarf notwendig ist, wie beispielsweise bloßes Fahren mit konstanter Geschwindigkeit.

Bei einer vorteilhaften Ausgestaltung ist der Frequenzabstand der jeweiligen Frequenz von der Resonanzfrequenz mit zunehmender Anzahl der elektrischen Leistung verbrauchenden Antriebe geringer,
insbesondere also in einem ersten Primärleiterabschnitt der Frequenzabstand geringer ist als in einem zweiten Primärleiterabschnitt, wenn im ersten Primärleiterabschnitt eine größere Anzahl von Antrieben gleichzeitig betrieben wird als im zweiten Primärleiterabschnitt. Von Vorteil ist dabei, dass zwar alle Frequenzen im Resonanzbereich des Schwingkreises angeordnet sind, aber die Frequenz mit der größten Leistungsübertragung für denjenigen Primärleiterabschnitt vorgesehen ist, bei dessen Benutzung durch das Mobilteil dieses den größten Leistungsbedarf aufweist, insbesondere zwei Antriebe gleichzeitig betreibt.

Bei einer vorteilhaften Ausgestaltung sind die Frequenzen der von den Einspeisegeräten in die Primärleiterabschnitte eingeprägten Wechselströme mit einer Schrittweite gestaffelt, welche zwischen einem Tausendstel und einem Hundertstel der Resonanzfrequenz beträgt. Von Vorteil ist dabei, dass ein genügend großer Abstand vorhanden ist, um eine sichere Erkennung zu ermöglichen und andererseits genügend viele Frequenzen im Resonanzbereich einrichtbar sind, insbesondere wie es bei großen Anlagen notwendig ist.

Wichtige Merkmale bei dem Verfahren zum Bestimmen der Position eines Mobilteils in einer Anlage, insbesondere Anlage mit Regallager, sind, dass
- in einem ersten Verfahrensschritt, insbesondere bei Inbetriebnahme, in einem Speicher des Mobilteils ein jeweiliger Frequenzwert zu jeweiligen Positionsbereichen, insbesondere Gassen der Anlage, hinterlegt wird,
- in einem zweiten Verfahrensschritt, insbesondere bei auf die Inbetriebnahme ausgeführtem Betrieb, die Frequenz der in der Sekundärwicklung des Mobilteils von einem Primärleiterabschnitt induzierten Spannung bestimmt wird und damit der Positionsbereich, insbesondere die Gasse, bestimmt wird,
- in einem dritten Verfahrensschritt, insbesondere bei auf die Inbetriebnahme ausgeführtem Betrieb, mit einem Positionsbestimmungsmittel die Position des Mobilteils innerhalb des im zweiten Verfahrensschritt bestimmten Positionsbereichs optisch basiert bestimmt wird, insbesondere mittels Auswertung der Signale eines am Mobilteil angeordneten Laserscanner und/oder mittels Auswertung von mit einer am Mobilteil angeordneten Kamera aufgenommenen Bildern.

Von Vorteil ist dabei, dass bei optisch basierten Systemen trotzdem eine Positionsbestimmung ermöglicht ist, auch wenn optisch kein Unterschied zu einem anderen Positionsbereich vorhanden ist. Denn der Positionsbereich wird durch die Frequenz eindeutig identifiziert, weil jeder der optisch für den Sensor des Mobilteils, wie Laserscanner und/oder Kamera, gleichartig erscheinenden Positionsbereiche eine eineindeutig zu ihm zugeordnete Frequenz in dem zum Positionsbereich zugehörigen Primärleiterabschnitt aufweist.

Wichtige Merkmale bei dem Verfahren zum Betreiben einer Anlage sind, dass in einem ersten Verfahrensschritt in einem Speicher des Mobilteils ein jeweiliger Frequenzwert zu jeweiligen Positionsbereichen hinterlegt wird,
in einem zweiten Verfahrensschritt mit einem Positionsbestimmungsmittel die Position des Mobilteils bestimmt wird,
in einem dritten Verfahrensschritt die Frequenz der in der Sekundärwicklung des Mobilteils von einem Primärleiterabschnitt induzierten Spannung bestimmt wird und verglichen wird mit dem zur bestimmten Position im Speicher hinterlegten Frequenzwert, insbesondere so dass bei Überschreiten eines vorgegebenen Maßes an Abweichung eine Warnung und/oder ein Fehler angezeigt und/oder weitergemeldet wird.

Von Vorteil ist dabei, dass eine Überprüfung der vom Positionsbestimmungsgerät bestimmten Position ausführbar ist und somit höhere Sicherheit erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

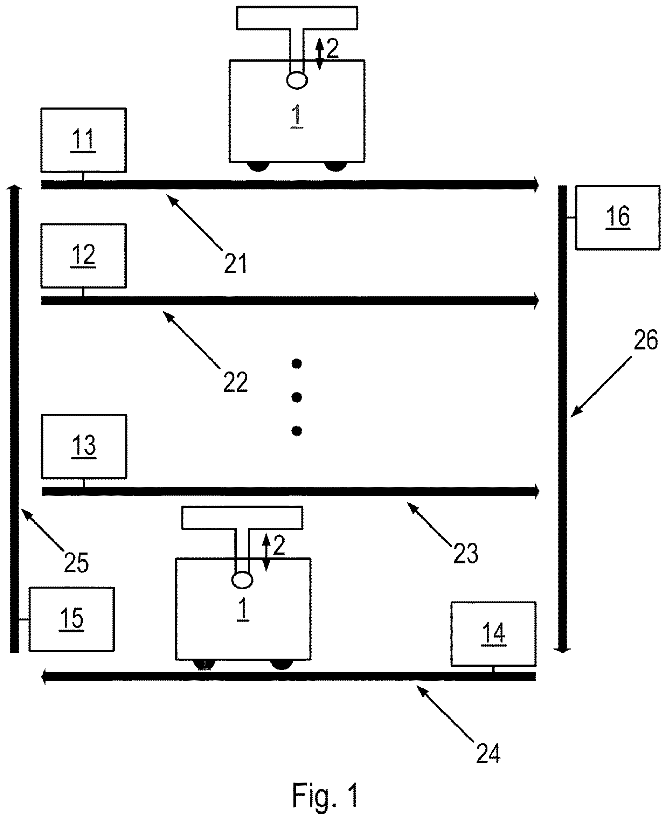

In der Figur 1 ist eine Anlage gezeigt, welche mehrere Primärleiterabschnitte (21, 22, 23, 24, 25, 26), die jeweils von einem Einspeisegerät (11, 12, 13, 14, 15, 16) versorgt werden.

Wie in Figur 1 dargestellt, sind Mobilteile 1 entlang der Primärleiterabschnitte bewegbar,

Wie in den Figuren dargestellt, weist das Mobilteil 1 jeweils einen Linearantrieb 2 auf, welcher eine Höhenverstellung einer an der Oberseite des Mobilteils angeordneten Aufnahmeplatte ermöglicht. Der Linearantrieb 2 weist einen Elektromotor auf.

Des Weiteren weist das Mobilteil 1 eine Steuerung auf, welche einen Traktionsantrieb des Mobilteils 1 ansteuert. Der Traktionsantrieb weist ebenfalls zumindest einen Elektromotor auf.

An der Unterseite des Mobilteils 1 ist eine Sekundärwicklung angeordnet, welche mit einem der Primärleiterabschnitte induktiv koppelbar ist, welche mit einem mittelfrequenten Wechselstrom beaufschlagt werden. Der Sekundärwicklung ist eine Kapazität in Reihe und/oder parallel zugeschaltet, so dass ein Schwingkreis gebildet ist, aus dem ein Energiespeicher des Mobilteils 1 versorgbar ist und/oder die Antriebe des Mobilteils, wie Traktionsantrieb und Linearantrieb, versorgbar sind. Auf diese Weise ist eine induktive Versorgung gewährleistet.

Die Güte des Schwingkreises ist dabei derart gewählt, dass ein Frequenzbereich mit einer Ausdehnung von 1% um die Resonanzfrequenz herum noch erlaubt ist. Somit ist also der jeweilige Primärleiterabschnitt mit einer jeweiligen Frequenz aus diesem Frequenzbereich herum bestrombar und es wird trotzdem mindestens 50% der Leistung übertragbar, die bei der exakten Resonanzfrequenz übertragbar ist. Auf diese Weise sind also die Primärleiterabschnitte mit einer jeweils für sie charakteristischen Frequenz bestrombar.

Beispielsweise sind die verwendeten Frequenzen mit jeweils 100 Hertz voneinander beabstandet. In der Steuerung des Mobilteils 1 ist die Anordnung der Primärleiterabschnitte und die jeweils zugehörige Frequenz hinterlegt. Somit ist von der Steuerung überprüfbar, ob die mittels eines Positionsbestimmungssystems bestimmte Position des Mobilteils 1 korrekt ist.

Das Mobilteil 1 weist hierzu ein Positionsbestimmungssystem auf, welches eine auf dem Mobilteil 1 angeordnete Kamera aufweist, mit welcher in der Anlage an Positionen angeordnete Informationsträger, insbesondere eindimensionale Codes oder zweidimensionale Codes, insbesondere Barcodes oder QR-Codes, erkennt und auswertet. Jeder der Informationsträger enthält eine Identifizierungsinformation, so dass das Positionserfassungssystem aus den detektierten Informationsträgern und den daraus erkannten Informationen die Position des Mobilteils bestimmt und an die Steuerung des Mobilteils weiterleitet. Im Speicher der Steuerung ist auch der Positionsbereich der jeweiligen Primärleiterabschnitte hinterlegt zusammen mit der zu jedem der Positionsbereiche, also Primärleiterabschnitte, zugehörigen Frequenz.

Somit ist überprüfbar, ob die vom Positionsbestimmungssystem bestimmte Position falsch ist. Hierzu wird die Frequenz des in der Sekundärwicklung induzierten Wechselstroms mit einem Frequenzbestimmungsmittel bestimmt und der hierbei erfasste Frequenzwert der Steuerung zugeleitet. Der so bestimmte Frequenzwert wird dann verglichen mit demjenigen Frequenzwert, welcher im Speicher zu demjenigen Positionsbereich hinterlegt ist, welcher die vom Positionsbestimmungssystem bestimmte Position umfasst. Bei Nicht-Übereinstimmung der beiden Frequenzwerte wird von der Steuerung eine Warnung und/oder Fehlermeldung angezeigt und/oder über eine Datenaustauschverbindung weitergemeldet.

Auch nach einem Notaus, Stromausfall oder Wiedereinschalten des Mobilteils muss dieses zunächst seine Position bestimmen. Wenn dies aber nicht möglich ist, weil das Positionsbestimmungssystem nicht vorhanden oder nicht einsatzfähig ist oder keine Informationen erkennen kann, wird zunächst der Frequenzwert des in den Primärleiterabschnitt eingeprägten Wechselstroms bestimmt und daraus der zugehörige Positionsbereich ermittelt. Mittels Bewegens des Mobilteils 1 entlang des Primärleiterabschnitts über dessen Ende hinaus, trifft das Mobilteil 1 dann auf einen anderen Primärleiterabschnitt, beispielsweise auf den einem Hauptweg zugeordneten Primärleiterabschnitt. Nach Bestimmen der diesem anderen Primärleiterabschnitt zugeordneten Frequenz und Bestimmen des zugehörigen, im Speicher hinterlegten Positionsbereichs ist somit die Position in für die Bewegung in der Anlage hinreichender Genauigkeit bestimmbar.

Die Einspeisegeräte fungieren jeweils als Stromquelle, insbesondere prägen sie jeweils einen Wechselstrom in den jeweiligen Primärleiterabschnitt ein.

Wie in Figur 1 gezeigt, ist entlang einer ersten Gasse der Anlage der erste Primärleiterabschnitt 21 am Boden verlegt, wobei in den Primärleiterabschnitt 21 von dem ersten Einspeisegerät 11 ein Wechselstrom erster Frequenz eingeprägt wird.

Ebenso ist entlang einer, insbesondere zur ersten Gasse parallel ausgerichteten, zweiten Gasse der Anlage der zweite Primärleiterabschnitt 22 am Boden verlegt, wobei in den Primärleiterabschnitt 22 von dem zweiten Einspeisegerät 12 ein Wechselstrom zweiter Frequenz eingeprägt wird.

Ebenso ist entlang einer, insbesondere zur ersten Gasse parallel ausgerichteten, dritten Gasse der Anlage der dritte Primärleiterabschnitt 23 am Boden verlegt, wobei in den Primärleiterabschnitt 23 von dem dritten Einspeisegerät 13 ein Wechselstrom dritter Frequenz eingeprägt wird.

Ebenso ist entlang einer, insbesondere zur ersten Gasse parallel ausgerichteten, vierten Gasse der Anlage der vierte Primärleiterabschnitt 24 am Boden verlegt, wobei in den Primärleiterabschnitt 24 von dem vierten Einspeisegerät 12 ein Wechselstrom vierter Frequenz eingeprägt wird.

An einem jeweils ersten Ende der ersten bis vierten Gasse münden diese in einen quer ausgerichteten ersten Hauptweg, über welchen Mobilteile 1 den Gassen zuführbar sind.

Am einem jeweiligen anderen Ende der ersten bis vierten Gasse münden diese in einen quer ausgerichteten weiteren Hauptweg, über welchen die Mobilteile 1 von den Gassen herausführbar sind.

Entlang des ersten Hauptweges der Anlage ist der fünfte Primärleiterabschnitt 25 am Boden verlegt, wobei in den Primärleiterabschnitt 25 von dem fünften Einspeisegerät 15 ein Wechselstrom fünfter Frequenz eingeprägt wird.

Entlang des zweiten Hauptweges der Anlage ist der sechste Primärleiterabschnitt 26 am Boden verlegt, wobei in den Primärleiterabschnitt 26 von dem sechsten Einspeisegerät 16 ein Wechselstrom sechster Frequenz eingeprägt wird.

Beispielsweise wird als Resonanzfrequenz 25kHz verwendet, wobei die Güte des Schwingkreises derart ist, dass bei optimale induktive Kopplung aufweisender Positionierung des Mobilteils 1 über einem der Primärleiterabschnitte mehr als 50% der maximalen Leistung ans Mobilteil übertragbar sind, auch wenn die verwendete Frequenz einen beliebigen Wert aus dem Frequenzbereich von 24kHz bis 26kHz aufweist. Insbesondere wird als erste bis sechste Frequenz Frequenzen verwendet, welche in 100 Hz Schritten gegeneinander abgestuft sind, wie beispielsweise 25 kHz, 24,9 kHz, 25,1 kHz, 24,8 kHz, 25,2 kHz, 25,3 kHz.

Während des Durchfahrens des ersten und zweiten Hauptwegs wird nur der Traktionsantrieb des Mobilteils 1 betrieben, nicht jedoch der Linearantrieb 2. Somit ist ein geringerer Leistungsbedarf als in den Gassen notwendig, wo jeweils nicht nur der Traktionsantrieb, sondern - zumindest zweitabschnittsweise - auch der Linearantrieb 2 betrieben wird. Auf diese Weise ist die Höhe der Aufnahmeplatte während des Durchfahrens der Gassen schon vor Erreichen der jeweils nächsten Arbeitsstation auf die gewünschte Höhe einstellbar. Allerdings ist somit auch der Leistungsbedarf höher als beim bloßen Betreiben der Traktionsantriebe.

Daher werden als erste bis vierte Frequenz Frequenzwerte vorgesehen, welche von der Resonanzfrequenz insbesondere frequenzmäßig weniger beabstandet sind als die fünfte Frequenz sowie die sechste Frequenz.

Erfindungsgemäß werden also die Frequenzwerte der Primärleiterabschnitte auf die jeweils notwendigen Leistungsbedarfe abgestimmt. Je größer der Leistungsbedarf desto geringer ist der Frequenzabstand der jeweiligen Frequenz zur Resonanzfrequenz. Allgemein ausgedrückt, ist der Frequenzabstand zur Resonanzfrequenz eine monoton steigende Funktion des Kehrwertes des Leistungsbedarfs.

Vorzugsweise wird als Leistungsbedarf ein erwarteter mittlerer Leistungswert oder alternativ ein erwarteter Spitzenwert an Leistung verwendet.

Erfindungsgemäß ist also eine Unterscheidung der verschiedenen Gassen mittels der der jeweiligen Gasse zugeordneten Frequenz, insbesondere individuellen Frequenz, ermöglicht. Somit dürfen diese Gassen exakt gleich ausgeführt werden. Auch wenn also andere Positionsbestimmungssysteme eingesetzt werden, wie beispielsweise bildbasierte oder kamerabasierte Systeme oder sonstige optisch basierte, ist die Position bestimmbar, weil die Zusatzinformation der Frequenz die jeweilige Gasse identifiziert.

Insbesondere ist also die Erfindung bei anlagen von Vorteil, bei welchen an den Mobilteilen Laserscanner angeordnet sind und die Positionsbestimmung nach dem SLAM-Verfahren ausgeführt wird. Denn dieses erstellt sich über Kameras oder Laserscanner ein Abbild der Umgebung. Wenn Gassen aber optisch exakt gleich ausgeführt werden, wird die Gasse über die Frequenz identifiziert und dann die Zielposition, beispielsweise ein Lagerplatz, mittels des optisch basierten Systems angefahren.

Bei weiteren erfindungsgemäßen Ausführungsbeispielen wird ein anderes Positionsbestimmungssystem zusätzlich oder alternativ verwendet, insbesondere ein odometrisches System und/oder ein GPS-artiges System und/oder ein Bildauswertesystem verwendet. Auf diese Weise ist eine verbesserte Genauigkeit und schnellere Positionsbestimmung erreichbar, insbesondere bei der Kombination von solchen Systemen.

Bei weiteren erfindungsgemäßen Ausführungsbeispielen wird eine Resonanzfrequenz von 50 kHz verwendet, wobei dann die Frequenzen in 200 Hz Schritten voneinander beabstandbar sind.

Bei weiteren erfindungsgemäßen Ausführungsbeispielen wird eine Resonanzfrequenz f_res verwendet, welche einen Wert zwischen 10 kHz und 1000 kHz aufweist, und es sind die Frequenzen mit einer Schrittweite voneinander beabstandbar, die zwischen einem Tausendstel und einem Hundertstel der Resonanzfrequenz beträgt.

### Bezugszeichenliste

1 Mobilteil
2 Linearantrieb, insbesondere Hubwerk
11 Einspeisegerät
12 Einspeisegerät
13 Einspeisegerät
14 Einspeisegerät
15 Einspeisegerät
16 Einspeisegerät
21 Primärleiterabschnitt
22 Primärleiterabschnitt
23 Primärleiterabschnitt
24 Primärleiterabschnitt
25 Primärleiterabschnitt
26 Primärleiterabschnitt

## Patentansprüche

1. Anlage mit einem Regallager mit Gassen mit jeweils einem am Boden verlegten Primärleiterabschnitt, wobei Einspeisegeräte dazu eingerichtet sind, in die Primärleiterabschnitte unterschiedliche Frequenzen einzuprägen, und mit mindestens einem Mobilteil mit einem Traktionsantrieb, einem Energiespeicher und einer Sekundärwicklung für eine induktive Versorgung des Mobilteils, wobei das Mobilteil dazu eingerichtet ist, die Frequenz des in der Sekundärwicklung induzierten Wechselstroms mit einem Frequenzbestimmungsmittel zu bestimmen und daraus den zugehörigen Positionsbereich der jeweiligen Gasse zu bestimmen.

2. Anlage nach Anspruch 1,
wobei das Mobilteil insbesondere an seiner Unterseite **die** Sekundärwicklung aufweist, welche **mit einem der Primärleiterabschnitte** induktiv koppelbar, insbesondere gekoppelt, ist,
**wobei** die Einspeisegeräte in die Primärleiterabschnitte jeweilige Wechselströme mit unterschiedlichen Frequenzen einprägen,
wobei das Mobilteil ein Mittel zum Erfassen der Frequenz des in den mit der Sekundärwicklung induktiv gekoppelten Primärleiterabschnitt eingeprägten Wechselstroms aufweist,
**wobei der Sekundärwicklung eine Kapazität parallel und/oder in Reihe zugeschaltet ist, wobei der so gebildete Schwingkreis eine Resonanzfrequenz aufweist,**
**wobei der Frequenzabstand der jeweiligen Frequenz von der Resonanzfrequenz mit dem Kehrwert eines dem jeweiligen Primärleiterabschnitt zugeordneten Leistungsbedarfs monoton abnimmt,**
**wobei der dem jeweiligen Primärleiterabschnitt zugeordneten Leistungsbedarf die beim Fahren entlang des jeweiligen Primärleiterabschnitts erwartete durchschnittliche Leistung oder die beim Fahren entlang des jeweiligen Primärleiterabschnitts erwartete Spitzenleistung ist.**

3. Anlage nach Anspruch 1,
wobei die Einspeisegeräte **jeweils** als Stromquelle fungieren.

4. Anlage nach mindestens einem der vorangegangenen Ansprüche,
wobei das Mobilteil einen Energiespeicher zum Abpuffern von Spitzenleistungsbedarfen und/oder **zur Leistungsversorgung beim** zumindest zeitabschnittsweisen Entfernen **des Mobilteils** von den Primärleiterabschnitten **aufweist.**

5. Anlage nach mindestens einem der vorangegangenen Ansprüche,
wobei das Mobilteil eine Steuerung aufweist, welche mit **ein**em Mittel zum Datenaustausch verbunden ist,
und/oder wobei das Mobilteil ein Positionsbestimmungsmittel aufweist, welches mit einer Steuerung zum Datenaustausch verbunden ist.

6. Anlage nach mindestens einem der vorangegangenen Ansprüche,
wobei in einem ersten **der** Primärleiterabschnitte der Frequenzabstand geringer ist als in einem zweiten **der** Primärleiterabschnitte, wenn im ersten Primärleiterabschnitt eine größere Anzahl von Antrieben gleichzeitig als im zweiten Primärleiterabschnitt **betrieben wird.**

7. Anlage nach mindestens einem der vorangegangenen Ansprüche,
wobei die Frequenzen der von den Einspeisegeräten in die Primärleiterabschnitte eingeprägten Wechselströme mit einer Schrittweite gestaffelt sind, welche zwischen einem Tausendstel und einem Hundertstel der Resonanzfrequenz beträgt.

8. Verfahren zum Bestimmen der Position eines Mobilteils in einer Anlage, mit Regallager, nach einem der vorangegangenen Ansprüche,
wobei in einem ersten Verfahrensschritt, insbesondere bei Inbetriebnahme, in einem Speicher des Mobilteils ein jeweiliger Frequenzwert zu jeweiligen Positionsbereichen, **also** Gassen der Anlage, hinterlegt wird,
in einem zweiten Verfahrensschritt, insbesondere bei auf die Inbetriebnahme ausgeführtem Betrieb, die Frequenz der in der Sekundärwicklung des Mobilteils von einem Primärleiterabschnitt induzierten Spannung bestimmt wird und damit der Positionsbereich, insbesondere die Gasse, bestimmt wird,
in einem dritten Verfahrensschritt, insbesondere bei auf die Inbetriebnahme ausgeführtem Betrieb, mit einem Positionsbestimmungsmittel die Position des Mobilteils innerhalb des im zweiten Verfahrensschritt bestimmten Positionsbereichs optisch basiert bestimmt wird, **nämlich** mittels Auswertung der Signale eines am Mobilteil angeordneten Laserscanner oder mittels Auswertung von mit einer am Mobilteil angeordneten Kamera aufgenommenen Bildern.

9. Verfahren zum Betreiben einer Anlage, nach einem der vorangegangenen Ansprüche,
wobei in einem ersten Verfahrensschritt in einem Speicher des Mobilteils ein jeweiliger Frequenzwert zu jeweiligen Positionsbereichen hinterlegt wird,
in einem zweiten Verfahrensschritt mit einem Positionsbestimmungsmittel die Position des Mobilteils bestimmt wird,
in einem dritten Verfahrensschritt die Frequenz der in der Sekundärwicklung des Mobilteils von einem Primärleiterabschnitt induzierten Spannung bestimmt wird und verglichen wird mit dem zur bestimmten Position im Speicher hinterlegten Frequenzwert, so dass bei Überschreiten eines vorgegebenen Maßes an Abweichung eine Warnung und/oder ein Fehler angezeigt und/oder weitergemeldet wird.

## Claims

1. Facility comprising high-bay racking having aisles, each having a primary conductor portion installed on the ground, wherein feed-in devices are configured to impress different frequencies on the primary conductor portions, and comprising at least one mobile component having a traction drive, an energy store and a secondary winding for inductively powering the mobile component, wherein the mobile component is configured to determine the frequency of the alternating current induced in the secondary winding using a frequency determination means and to determine therefrom the associated position region of the particular aisle.

2. Facility according to claim 1,
wherein the mobile component has the secondary winding in particular on its underside, which secondary winding can be, in particular is, inductively coupled to one of the primary conductor portions,
wherein the feed-in devices impress respective alternating currents of different frequencies on the primary conductor portions,
wherein the mobile component has a means for detecting the frequency of the alternating current impressed on the primary conductor portion inductively coupled to the secondary winding,
wherein a capacitor is wired in parallel or in series with the secondary winding, wherein the resonant circuit thus formed has a resonant frequency,
wherein the frequency spacing between the particular frequency and the resonant frequency decreases monotonically with the reciprocal of a power demand associated with the particular primary conductor portion,
wherein the power demand associated with the particular primary conductor portion is the average power expected during travel along the particular primary conductor portion or the peak power expected during travel along the particular primary conductor portion.

3. Facility according to claim 1,
wherein the feed-in devices each function as a power source.

4. Facility according to at least one of the preceding claims,
wherein the mobile component has an energy store for buffering peak power demands and/or for supplying power when the mobile component is removed from the primary conductor portions at least for certain time periods.

5. Facility according to at least one of the preceding claims,
wherein the mobile component has a controller that is connected for data exchange to a means,
and/or wherein the mobile component has a position determination means that is connected for data exchange to a controller.

6. Facility according to at least one of the preceding claims,
wherein the frequency spacing is smaller in a first of the primary conductor portions than in a second of the primary conductor portions if a greater number of drives are being simultaneously operated in the first primary conductor portion than in the second primary conductor portion.

7. Facility according to at least one of the preceding claims,
wherein the frequencies of the alternating currents impressed on the primary conductor portions by the feed-in devices are staggered by an increment of between one thousandth and one hundredth of the resonant frequency.

8. Method for determining the position of a mobile component in a facility comprising high-bay racking according to any of the preceding claims,
wherein, in a first method step, in particular during commissioning, a particular frequency value for each position region, that is aisles in the facility, is stored in a memory of the mobile component,
in a second method step, in particular during operation carried out after commissioning, the frequency of the voltage induced by a primary conductor portion in the secondary winding of the mobile component is determined, and so the position region, in particular the aisle, is determined,
in a third method step, in particular during operation carried out after commissioning, the position of the mobile component within the position region determined in the second method step is determined in an optically based manner using a position determination means, namely by evaluating the signals of a laser scanner arranged on the mobile component and/or by evaluating images recorded by a camera arranged on the mobile component.

9. Method for operating a facility according to any of the preceding claims,
wherein, in a first method step, a particular frequency value for each position region is stored in a memory of the mobile component,
in a second method step, the position of mobile component is determined using a position determination means,
in a third method step, the frequency of the voltage induced by a primary conductor portion in the secondary winding of the mobile component is determined and compared with the frequency value stored in the memory in relation to the determined position, such that a warning and/or an error is displayed and/or relayed in the event that a predetermined degree of divergence is exceeded.

## Revendications

1. Installation comprenant un magasin à rayonnage muni d'allées présentant, à chaque fois, un tronçon de conducteur primaire posé au sol, des appareils d'alimentation étant conçus pour introduire des fréquences différentes dans les tronçons de conducteurs primaires ; et au moins une partie mobile dotée d'un entraînement en traction, d'un accumulateur d'énergie et d'un enroulement secondaire dédié à une alimentation inductive de ladite partie mobile, laquelle partie mobile est conçue pour déterminer, à l'aide d'un moyen de détermination de fréquences, la fréquence du courant alternatif induit dans ledit enroulement secondaire et pour déterminer, sur cette base, la plage d'emplacements associée de l'allée considérée.

2. Installation selon la revendication 1,
dans laquelle
la partie mobile est dotée, en particulier à sa face inférieure, de l'enroulement secondaire pouvant être, et étant notamment couplé inductivement à l'un des tronçons de conducteurs primaires,
sachant que les appareils d'alimentation introduisent, dans lesdits tronçons de conducteurs primaires, des courants alternatifs respectifs à fréquences différentes,
ladite partie mobile étant munie d'un moyen affecté à la détection de la fréquence du courant alternatif introduit dans le tronçon de conducteur primaire couplé inductivement audit enroulement secondaire,
un condensateur étant additionnellement branché en parallèle ou en série avec ledit enroulement secondaire, le circuit oscillant ainsi formé présentant une fréquence de résonance,
sachant que
l'écart de la fréquence considérée, par rapport à ladite fréquence de résonance, décroît de manière monotone suivant la valeur inverse d'un besoin en puissance associé au tronçon de conducteur primaire respectif,
lequel besoin en puissance, associé au tronçon de conducteur primaire respectif, constitue la puissance moyenne escomptée lors du déplacement le long dudit tronçon de conducteur primaire respectif, ou bien la puissance de crête escomptée lors du déplacement le long dudit tronçon de conducteur primaire respectif.

3. Installation selon la revendication 1,
dans laquelle
les appareils d'alimentation remplissent, à chaque fois, la fonction d'une source de courant.

4. Installation selon au moins l'une des revendications précédentes,
dans laquelle
la partie mobile est dotée d'un accumulateur d'énergie dévolu à l'amortissement de besoins en puissance de crête et/ou à l'alimentation en puissance lorsque ladite partie mobile est éloignée des tronçons de conducteurs primaires, au moins par intervalles de temps.

5. Installation selon au moins l'une des revendications précédentes,
dans laquelle
la partie mobile est nantie d'une commande connectée à un moyen d'échange de données ; et/ou dans laquelle ladite partie mobile est équipée d'un moyen de détermination d'emplacements, connecté à une commande en vue de l'échange de données.

6. Installation selon au moins l'une des revendications précédentes,
dans laquelle,
l'écart entre fréquences est moindre dans un premier tronçon, parmi les tronçons de conducteurs primaires, que dans un deuxième tronçon, au sein desdits tronçons de conducteurs primaires, lorsqu'un nombre d'entraînements actionnés en simultanéité est supérieur, dans ledit premier tronçon de conducteur primaire à celui dudit deuxième tronçon de conducteur primaire.

7. Installation selon au moins l'une des revendications précédentes,
dans laquelle
les fréquences des courants alternatifs, introduits dans les tronçons de conducteurs primaires par les appareils d'alimentation, sont échelonnées à raison d'un incrément compris entre un millième et un centième de la fréquence de résonance.

8. Procédé de détermination de l'emplacement occupé par une partie mobile dans une installation conforme à l'une des revendications précédentes, pourvue d'un magasin à rayonnage,
dans lequel,
lors d'une première étape opératoire, en particulier au stade de la mise en service, une valeur de fréquence considérée affectée à des plages d'emplacements respectives, c'est-à-dire à des allées de ladite installation, est stockée dans une mémoire de la partie mobile, lors d'une deuxième étape opératoire, en particulier lors d'un actionnement succédant à la mise en service, la fréquence de la tension, induite dans l'enroulement secondaire de ladite partie mobile par un tronçon de conducteur primaire, est déterminée en impliquant ainsi une détermination de la plage d'emplacements, en particulier de l'allée,
lors d'une troisième étape opératoire, en particulier lors d'un actionnement succédant à la mise en service, l'emplacement occupé par la partie mobile, à l'intérieur de la plage d'emplacements déterminée lors de la deuxième étape opératoire, est déterminé sur une base optique à l'aide d'un moyen de détermination d'emplacements, plus précisément au moyen d'une évaluation des signaux d'un scanneur laser installé sur la partie mobile, ou au moyen d'une évaluation d'images enregistrées par une caméra installée sur ladite partie mobile.

9. Procédé d'actionnement d'une installation conforme à l'une des revendications précédentes,
dans lequel,
lors d'une première étape opératoire, une valeur de fréquence considérée, affectée à des plages d'emplacements respectives, est stockée dans une mémoire de la partie mobile, lors d'une deuxième étape opératoire, l'emplacement occupé par ladite partie mobile est déterminé à l'aide d'un moyen de détermination d'emplacements,
lors d'une troisième étape opératoire, la fréquence de la tension, induite dans l'enroulement secondaire de ladite partie mobile par un tronçon de conducteur primaire, est déterminée et comparée à la valeur de fréquence affectée à l'emplacement déterminé, stockée dans ladite mémoire, de telle sorte qu'une alerte et/ou une erreur soi(en)t affichée(s) et/ou signalée(s) en cas de dépassement d'un degré d'écart préétabli.
